# DEMANDE DE BREVET EUROPEEN

(11) **EP 4 245 870 A1**
(43) Date de publication de la demande: **20.09.2023**
(21) Numéro de dépôt: 23160976.9
(22) Date de dépôt: 09.03.2023
(51) Int. Cl.: C22B 34/34, C22B 3/00, C22B 23/06

(54) **MÉTHODE DE RECYCLAGE DE MÉTAUX À PARTIR DE MATÉRIAUX POREUX LES COMPRENANT**

(30) Priorité: 18.03.2022 FR 2202405
(71) Demandeur: Eurecat S.A., 07800 La Voulte-sur-Rhône (FR)
(72) Inventeur: LABRUYERE, Franck, 07800 CHARMES SUR RHONE (FR); GALLIOU, Pauline, 07800 SAINT LAURENT DU PAPE (FR)
(74) Mandataire: Casalonga

(57) **Abrégé**

La présente invention a pour objet une méthode de recyclage d'un métal ou plusieurs métaux M choisis parmi ceux appartenant aux colonnes 8 à 12 du tableau périodique des éléments, présents au moins en partie sous forme de sulfures métalliques dans un matériau poreux A comprenant au moins un oxyde minéral et ayant une teneur en soufre supérieure ou égale à 2% en poids. Ladite méthode comprend les étapes successives suivantes:
(1) au moins une étape de traitement thermique du matériau A en présence d'oxygène, à une température comprise dans la gamme allant de 350°C à 900°C,
(2) au moins une étape de lavage du matériau A' issu de l'étape (1) au moyen d'un solvant aqueux ;
(3) au moins une étape d'extraction du ou des métaux M par mise en contact du matériau A" issu de l'étape (2) avec une solution S contenant au moins un acide carboxylique ; et
(4) au moins une étape de dépôt d'au moins une partie du ou des métaux M sur un matériau poreux B différent dudit matériau A, par mise en contact de la solution S' issue de l'étape (3) avec ledit matériau B.

## Description

La présente invention porte sur le recyclage des métaux présents dans des matériaux poreux tels que notamment des pièges et des agents adsorbants utilisés dans les domaines du raffinage pétrolier et de la pétrochimie.

### ETAT DE L'ART ANTERIEUR

Les procédés de transformation des hydrocarbures mettent en oeuvre des agents communément dénommés pièges ou adsorbants, qui sont des matériaux poreux généralement sous forme de particules, à base d'un ou plusieurs oxydes réfractaires tels que l'alumine, la silice, les aluminosilicates (zéolithes), et qui contiennent en outre une quantité substantielle d'un métal tel que le nickel, le cuivre, le zinc.

Ces matériaux sont employés afin de piéger, par exemple de retenir par adsorption, des espèces chimiques indésirables. Par exemple, des pièges sont typiquement employés dans les réacteurs d'hydrotraitement en amont des lits de catalyseur afin de piéger les agents contaminants présents dans la charge pétrolière (incluant des composés soufrés, des composés contenant des métaux indésirables tels que le mercure, le vanadium, l'arsenic,...) et de protéger le catalyseur de tels agents contaminants susceptibles d'empoisonner les sites catalytiques et de provoquer sa désactivation prématurée.

Ces matériaux sont ainsi destinés à être contaminés par des composés indésirables à des teneurs très élevées, ce qui à la fin de leur cycle d'utilisation conduit à des matériaux usagés qu'il est difficile de recycler et/ou de régénérer.

Cependant, il devient essentiel de pouvoir recycler les métaux présents en quantités souvent importantes dans ces matériaux.

La problématique du recyclage des métaux présents dans les catalyseurs est différente de celle du recyclage des métaux présents dans les pièges et agents adsorbants, d'une part parce que la teneur en métaux est significativement plus élevée dans les pièges et adsorbants que dans les catalyseurs, d'autre part parce que le niveau de contamination est beaucoup plus élevé dans les pièges et adsorbants et la nature des contaminants est différente.

Des méthodes de recyclage des métaux présents dans les catalyseurs ont été développées dans l'état de la technique, mais celles-ci ne sont pas toujours efficaces pour recycler les métaux présents dans des pièges ou adsorbants usés.

Dans l'ouvrage intitulé « Handbook of Spent Hydroprocessing Catalyst », Elsevier Science Ltd, 1ère édition, 2010, au chapitre 11 les auteurs Meena Marafi et al décrivent différentes techniques de récupération des métaux à partir de catalyseurs d'hydrotraitement usés, contenant essentiellement de l'alumine et des métaux tels que le molybdène, le nickel et le cobalt, voire le vanadium. Les techniques les plus classiques décrites sont :
- les voies pyrométallurgiques, dans lesquelles les catalyseurs usés sont fondus dans un four approprié pour séparer les métaux d'un laitier contenant de l'alumine et/ou de la silice. Le recyclage se fait ainsi en boucle dite ouverte, puisque les métaux sont valorisés par exemple dans des alliages spéciaux tandis que le laitier est typiquement destiné à produire des matériaux isolants tels que de la laine de roche.
- les voies hydrométallurgiques, dans lesquelles les catalyseurs usés sont soumis à une calcination suivie d'une lixiviation, généralement effectuée avec des solutions d'acides et/ou de bases fortes. L'utilisation d'acides organiques ou de micro-organismes (bio-lixiviation) est également décrite.

D'autres techniques ont été étudiées, mettant en oeuvre par exemple une sublimation de certains métaux tels que le molybdène, une volatilisation ou une dissolution des métaux par exemple en milieu chloré, une réduction couplée à une séparation par voie magnétique. Ces techniques restent difficilement exploitables à l'échelle industrielle.

La demande de brevet WO 2007/001921 décrit un procédé d'extraction et de récupération de nickel, cobalt, fer, tungstène, molybdène et vanadium à partir d'un matériau à base d'alumine (tel qu'un catalyseur imprégné d'hydrocarbures) comprenant l'oxydation des métaux dans une atmosphère contenant de l'oxygène, la réaction des métaux oxydés avec HCl gazeux pour former des composés volatils comprenant un ou plusieurs chlorures et/ou oxychlorures. Le maniement de ce type de composés particulièrement corrosifs nécessite des installations très particulières, ainsi qu'un savoir-faire et un niveau de sécurité importants.

La demande WO 03/080878 décrit un procédé d'extraction de nickel à partir d'un catalyseur usé par lixiviation avec de l'acide sulfurique en présence d'un additif à base de persulfate. La liqueur de lixiviation est ensuite traitée pour obtenir un sous-produit contenant une haute teneur en alumine, et des cristaux de sulfate de nickel ou de l'hydroxyde de nickel. L'hydroxyde de nickel est ensuite réduit pour obtenir de la poudre de nickel métallique ou de l'oxyde de nickel.

La demande KR 20120128913 décrit une méthode de récupération des métaux précieux contenus dans des déchets, par lixiviation au moyen d'une solution aqueuse d'acide organique.

### RESUME DE L'INVENTION

La Demanderesse a maintenant découvert une méthode qui permet de recycler de manière efficace les métaux présents dans des matériaux poreux tels que notamment des pièges et des agents adsorbants. La méthode selon l'invention permet d'extraire sélectivement ces métaux, y compris lorsque le matériau les contenant est très fortement contaminé, et de les redéposer sur un autre matériau dans lequel ils seront réutilisés.

Ainsi, la présente invention a pour objet une méthode de recyclage d'un métal ou de plusieurs métaux M choisis parmi ceux appartenant aux colonnes 8 à 12 du tableau périodique des éléments, présents au moins en partie sous forme de sulfures métalliques dans un matériau poreux A qui comprend au moins un oxyde minéral et présente une teneur en soufre supérieure ou égale à 2% en poids. La méthode selon l'invention comprend les étapes successives suivantes:
(1) au moins une étape de traitement thermique du matériau A en présence d'oxygène, à une température comprise dans la gamme allant de 350°C à 900°C,
(2) au moins une étape de lavage du matériau A' issu de l'étape (1) au moyen d'un solvant aqueux ;
(3) au moins une étape d'extraction du ou des métaux M par mise en contact du matériau A" issu de l'étape (2) avec une solution S contenant au moins un acide carboxylique ; et
(4) au moins une étape de dépôt d'au moins une partie du ou des métaux M sur un matériau poreux B différent dudit matériau A, par mise en contact de la solution S' issue de l'étape (3) avec ledit matériau B.

L'invention permet ainsi de recycler un métal ou plusieurs métaux M appartenant aux colonnes 8 à 12 du tableau périodique présent(s) sur un matériau poreux A à base d'oxyde minéral, contaminé par des composés indésirables incluant au moins du soufre présent sous forme de sulfures métalliques et d'autres composés soufrés tels que des hydrocarbures soufrés. Le matériau A est typiquement un piège ou un agent adsorbant usé, suite à son utilisation dans une unité de traitement d'hydrocarbures.

Le matériau B peut être tout matériau poreux apte à recevoir un dépôt du ou des métaux M. De manière avantageuse, le matériau B peut être dépourvu de métaux et dans ce cas l'invention permet entre autres de préparer des catalyseurs, pièges et/ou agents adsorbants, destinés à être employés dans des unités de traitement d'hydrocarbures. Selon une alternative également avantageuse, le matériau B est un catalyseur, un piège ou un agent adsorbant, à l'état neuf ou à l'état recyclé (régénéré), et dans ce cas l'invention permet d'en modifier l'activité.

La méthode selon la présente invention est simple à mettre en oeuvre, et ne nécessite pas d'employer des agents toxiques ou corrosifs. Elle permet de réutiliser de manière efficace le ou les métaux présents sur le matériau usé A de départ. De plus, les métaux sont recyclés sous une forme catalytiquement active, ce qui permet d'une part de préparer de nouveaux matériaux actifs comme catalyseurs, pièges et/ou agents adsorbants, et d'autre part d'augmenter l'activité de catalyseurs, pièges et/ou agents adsorbants existants.

Le taux de recyclage des métaux peut atteindre 50 à 75% en poids des métaux initialement contenus par le matériau A.

De plus, les solutions S contenant un ou plusieurs acides carboxyliques peuvent être réutilisées telles quelles, sans traitement de purification supplémentaire.

D'autres objets, caractéristiques, aspects et avantages de l'invention apparaîtront encore plus clairement à la lecture de la description et des exemples qui suivent.

Dans ce qui va suivre, et à moins d'une autre indication, les bornes d'un domaine de valeurs sont comprises dans ce domaine, notamment dans les expressions « compris entre » et « allant de ... à ...».

Par ailleurs, les expressions « au moins un » et « au moins » utilisées dans la présente description sont respectivement équivalentes aux expressions « un ou plusieurs » et « supérieur ou égal ».

### DESCRIPTION DETAILLEE

### Le matériau A de départ (matériau donneur de métaux)

La présente invention s'applique à un matériau A de départ, qui est un matériau contaminé notamment par du soufre, et qui contient un métal ou plusieurs métaux M que l'on souhaite sélectivement extraire pour le (les) transférer vers un matériau B, qui est typiquement un matériau non contaminé destiné à être utilisé.

Le métal ou les métaux M sont choisis parmi ceux appartenant aux colonnes 8 à 12 du tableau périodique des éléments. Il est fait référence ici à la version du tableau périodique des éléments telle que publiée par l'IUPAC (International Union of Pure and Applied Chemistry).

Dans le matériau A de départ, le métal ou les métaux M sont présents, en tout ou en partie, sous forme de sulfures métalliques (c'est à dire de sulfures de métaux). Lorsque le métal (les métaux) M ne sont pas dans leur intégralité sous forme de sulfures métalliques, ils peuvent également se présenter sous forme de toute autre espèce chimique telle que des oxydes de métaux, des formes métalliques élémentaires.

De préférence, le métal ou les métaux M sont choisis parmi le fer, le cobalt, le nickel, le cuivre, et le zinc et plus préférentiellement parmi le nickel, le cuivre, et le zinc.

Selon un mode de réalisation préféré, le matériau A contient un seul métal M appartenant aux colonnes 8 à 12 du tableau périodique des éléments. Dans ce mode de réalisation, le métal M présent est de préférence le nickel, le cuivre, ou le zinc.

Selon un autre mode de réalisation préféré, le matériau A ne contient pas de métal appartenant à la colonne 6 du tableau période des éléments.

Le matériau A contient en outre un ou plusieurs oxydes minéraux réfractaires, qui peuvent être notamment choisis parmi les alumines, les silices, les silice-alumines, les zéolithes, les zircones, les oxydes de titane et de bore, et les mélanges de tels oxydes. Lorsque ledit ou lesdits oxydes minéraux sont des oxydes métalliques, ils sont choisis parmi les oxydes de métaux n'appartenant pas aux colonnes 8 à 12 du tableau périodique des éléments.

De préférence, le matériau A contient un ou plusieurs oxydes minéraux choisis parmi les alumines, les silices, les silice-alumines, et plus préférentiellement les alumines.

Le matériau A contient un ou plusieurs métaux M en une teneur, exprimée sous la forme du ratio du poids total du ou des oxydes de métaux M au poids total dudit ou desdits oxydes minéraux, avantageusement comprise dans la gamme de ratio allant typiquement de 0,2 à 5,5, de préférence de 1 à 4. Pour mesurer ce ratio, la masse de métaux M présente dans le matériau A est exprimée sur la base de la quantité équivalente totale d'oxydes des métaux correspondants.

Le matériau A de départ contient également du soufre, à une teneur d'au moins 2% en poids.

Cette teneur est avantageusement exprimée en poids de soufre élémentaire (c'est-à-dire d'élément S) par rapport au poids du matériau A ayant subi un traitement thermique à une température de 250°C pendant 2 heures sous azote. En d'autres termes, la teneur en soufre du matériau A de départ est mesurée sur le matériau obtenu après traitement pendant une durée de 2h à une température de 250°C sous azote, puis refroidissement sous azote à température ambiante.

Le matériau A de départ se présente généralement sous forme de particules solides telles que des billes, des particules de forme cylindrique, des extrudés, des pastilles. Il présente une surface spécifique, mesurée par la méthode BET, généralement comprise entre 50 et 250 m²/g, un volume poreux, déterminé par adsorption d'azote, allant de 0.2 à 0.8 ml/g, et un diamètre de pores moyen, déterminé par adsorption d'azote, allant de 10 à 40 nm.

### Le matériau B (matériau receveur de métaux)

Le matériau B employé à l'étape (4) peut être tout matériau poreux, différent du matériau A de départ.

Il comprend avantageusement un ou plusieurs oxydes minéraux réfractaires, qui peuvent être notamment choisis parmi les alumines, les silices, les silice-alumines, les zéolithes, les zircones, les oxydes de titane et de bore, et les mélanges de tels oxydes.

De préférence, le matériau B contient un ou plusieurs oxydes minéraux choisis parmi les alumines, les silices, les silice-alumines, et plus préférentiellement les alumines.

Selon un premier mode de réalisation, le matériau B ne contient pas de métaux. Dans ce mode de réalisation, la méthode selon l'invention permet par exemple de préparer de nouveaux pièges, adsorbants et catalyseurs à partir de supports d'oxydes inorganiques vierges.

Selon un second mode de réalisation, le matériau B contient un métal ou plusieurs métaux M', qui peuvent être identiques ou différents desdits métaux M. Le métal (les métaux) M' peuvent être notamment choisis parmi ceux appartenant aux colonnes 6 à 12 du tableau périodique des éléments. Lesdits métaux M' lorsqu'ils sont présents se présentent de préférence sous forme d'oxydes de métaux, ou sous forme élémentaire. Dans ce mode de réalisation, la méthode selon l'invention permet notamment d'améliorer l'efficacité de pièges, adsorbants et catalyseurs.

Selon un mode de réalisation préféré, le matériau B est dépourvu de soufre. Par dépourvu de soufre, on entend que la teneur en soufre, exprimée sous forme de soufre élémentaire S, est inférieure à 0,5% en poids par rapport au poids du matériau B.

Le matériau B se présente de préférence sous forme de particules solides telles que des billes, des particules de forme cylindrique, des extrudés. Il présente une surface spécifique, mesurée par la méthode BET, généralement comprise entre 50 et 300 m²/g, un volume poreux, déterminé par adsorption d'azote, allant de 0.2 à 1 ml/g, et un diamètre de pores moyen, déterminé par adsorption d'azote, allant de 7 à 40 nm.

### L'étape (1)

L'étape (1) consiste en un traitement thermique du matériau A de départ en présence d'oxygène, à une température comprise dans la gamme allant de 350°C à 900°C.

Cette étape a pour but d'éliminer les composés volatils (tels que les hydrocarbures, l'eau) et les composés carbonés (incluant le coke) présents à la surface du matériau A.

De préférence, cette étape de traitement thermique est effectuée à une température comprise dans la gamme de 400 à 600°C, plus préférentiellement de 450 à 580°C et mieux encore de 480 à 570°C.

La température de cette étape peut être contrôlée, de manière connue en soi, par exemple au moyen de thermocouples disposés de manière appropriée dans la masse du matériau A.

La première étape est effectuée en présence d'oxygène, par exemple au moyen d'un flux de gaz contenant de l'oxygène. Ce gaz peut être constitué par exemple d'air, pur ou mélangé à de l'oxygène additionnel ou à un gaz inerte, de manière à augmenter ou diminuer la teneur de l'air en oxygène. Ce gaz peut également être constitué d'un mélange d'oxygène et de gaz inerte tel que l'azote, ou d'autres mélanges gazeux comprenant de l'oxygène.

La teneur en oxygène du gaz est de préférence contrôlée, de manière à mieux contrôler la température de l'étape (1). Cette teneur peut être fixe, ou au contraire varier au cours du temps lors de la première étape.

Le débit de gaz est également contrôlé, de façon à contrôler la combustion.

Cette étape de traitement thermique peut comprendre plusieurs phases, effectuées à des températures différentes et/ou en présence de quantités variables d'oxygène.

La durée totale de cette première étape dépend généralement de la quantité de matériau A à traiter, de la composition de celui-ci, de la quantité de composés volatils présent à sa surface, et des conditions opératoires (température, teneur en oxygène). Cette durée est d'autant plus courte que la température est élevée. Elle est généralement comprise entre 0,1 et 20 heures, de préférence entre 0,2 et 10 heures.

Le matériau A après traitement à l'étape (1) est dénommé matériau A'.

### L'étape (2)

Cette étape consiste à laver le matériau A' issu de l'étape (1) au moyen d'un solvant aqueux. Un tel lavage consiste à mettre la surface du matériau A' au contact du solvant aqueux, puis à éliminer ledit solvant.

Par solvant aqueux, on désigne tout solvant contenant de l'eau. Le solvant peut ainsi comprendre, outre l'eau, tout solvant organique miscible à l'eau, qui peut être choisi par exemple parmi les alcools, les polyols.

Le solvant aqueux peut être additionné de tout additif, organique ou inorganique.

Selon un mode de réalisation préféré, le solvant aqueux contient au moins 50% en poids d'eau, de préférence au moins 75% en poids, et mieux encore au moins 90% en poids d'eau. De manière plus préférée, le solvant est constitué d'eau (teneur en eau supérieure à 99% en poids).

Le volume de solvant aqueux employé à cette étape est avantageusement supérieur au volume poreux total de l'échantillon de matériau A' à traiter. Ce volume peut être notamment compris dans la gamme allant de 2 à 20 fois le volume poreux total de l'échantillon de matériau A', de préférence de 5 à 10 fois ledit volume poreux.

L'étape (2) peut être effectuée à toute température appropriée, allant par exemple de la température ambiante (20°C) à 150°C. De préférence, cette étape est effectuée sous un léger chauffage, c'est-à-dire à une température allant de 25 à 100°C, de préférence de 30 à 70°C.

Au cours de cette étape, il est avantageux de procéder à un brassage du matériau A' et du solvant aqueux, de manière à assurer un lavage efficace de la surface du matériau.

Cette étape peut être effectuée en mode continu ou en mode discontinu (mode dit « batch »), le mode discontinu étant préféré d'autant plus qu'il permet de limiter la quantité d'eau mise en oeuvre.

Cette étape peut être réalisée dans toute unité de type extracteur solide/liquide ou mélangeur industriel (par exemple un mélangeur conique ou biconique).

Le matériau A' après traitement à l'étape (1) est dénommé matériau A".

### L'étape (3)

Cette étape consiste à extraire le ou les métaux M par mise en contact du matériau A" issu de l'étape (2) avec une solution S contenant au moins un acide carboxylique. Cette étape permet d'extraire les métaux du matériau A", par dissolution de ceux-ci sous forme de sels d'acides organiques.

La solution S comprend un solvant qui peut être choisi parmi l'eau, les solvants organiques (notamment les alcools, les polyols), et les mélanges d'eau et de solvants organiques.

De préférence, la solution S contient au moins 50% en poids d'eau, de préférence au moins 60% en poids d'eau, par rapport au poids total de la solution S.

Le ou les acides carboxyliques présents dans la solution S peuvent être des mono-acides, des di-acides ou des tri-acides carboxyliques. Ils comprennent de préférence de 1 à 8 atomes de carbone.

Selon un mode de réalisation préféré, le ou les acides carboxyliques sont choisis parmi l'acide acétique, l'acide citrique, l'acide maléique, l'acide glycolique, et les mélanges de ces acides. De préférence, le ou les acides carboxyliques sont choisis parmi l'acide acétique, l'acide citrique, et leurs mélanges.

La solution S contient une teneur totale d'acides carboxyliques typiquement comprise dans la gamme allant de 5 à 50% en poids, de préférence de 10 à 30% en poids, par rapport au poids total de la solution S.

Le volume de solution S employé à l'étape (3) est avantageusement supérieur au volume poreux total de l'échantillon de matériau A" à traiter.

Ce volume peut être notamment compris dans la gamme allant de 2 à 50 fois le volume poreux total de l'échantillon de matériau A", de préférence de 5 à 20 fois ledit volume poreux, et mieux encore de 10 à 15 fois ledit volume poreux.

L'étape (3) peut être effectuée à toute température appropriée, allant par exemple de la température ambiante (20°C) à 150°C. De préférence, cette étape est effectuée à chaud, c'est-à-dire à une température allant de 50 à 130°C, de préférence de 80 à 120°C.

Au cours de cette étape, il est avantageux de procéder à un brassage du matériau A" et de la solution S, de manière à assurer un contact optimal de la solution avec la surface du matériau.

Cette étape peut être effectuée en mode continu ou en mode discontinu (mode « batch »), dans toute unité appropriée, par exemple dans un extracteur solide/liquide ou mélangeur industriel (par exemple un mélangeur conique ou biconique).

A l'issue de l'étape (3), la solution S' contenant des sels du métal (des métaux) M est séparée du matériau A", par toute méthode de séparation appropriée, par exemple par filtration ou par centrifugation.

### L'étape (4)

Au cours de cette étape, le métal ou les métaux M présents sous forme de sels dans la solution S' issue de l'étape (3) sont déposés sur le matériau poreux B. On procède par mise en contact de la solution S' contenant des sels métalliques issue de l'étape (3) avec ledit matériau B.

Selon un mode de réalisation préféré, l'étape (4) est réalisée par imprégnation du matériau B au moyen de ladite solution. L'on peut procéder par imprégnation à sec (c'est-à-dire en employant un volume de solution inférieur au volume poreux du matériau B), par imprégnation à saturation du volume poreux (c'est-à-dire en employant un volume de solution supérieur ou égal au volume poreux du matériau B), ou par trempage du matériau B dans un large excès de solution S'.

Cette mise en contact peut être instantanée ou durer jusqu'à quelques jours. De préférence, la solution S' est maintenue en contact avec ledit matériau B pendant une durée allant de 1 à 30 heures, de préférence de 5 à 25 heures, et mieux encore de 10 à 20 heures.

L'étape (4) peut être réalisée à une pression allant de la pression atmosphérique à 5 bars, de préférence à pression atmosphérique.

L'étape (4) peut être effectuée à toute température appropriée, allant par exemple de 10°C à 50°C. De préférence, cette étape est effectuée à une température allant de 10 à 30°C.

D'une manière générale, l'étape (4) doit être réalisée dans des conditions permettant le dépôt à la surface du matériau B d'une quantité la plus importante possible de métal M.

Selon un mode de réalisation préféré, l'étape (4) est répétée une ou plusieurs fois (par exemple répétée jusqu'à 5 fois), de manière à augmenter la quantité de métal M déposée sur le matériau B. Dans ce mode de réalisation, l'on peut avantageusement remettre en contact le matériau B avec la même solution S', ou avec une solution S₀' différente, issue du traitement au moyen des étapes (1) à (3) d'un matériau de départ A₀ différent de A, et qui contient un métal ou plusieurs métaux M₀' qui peuvent être identiques ou différents du métal ou des métaux M.

Dans le cas où l'étape (4) est répétée, il peut être avantageux de procéder à un séchage intermédiaire du matériau B, tel que décrit ci-après, avant chaque réitération de l'étape (4).

De préférence, à l'issue de la méthode selon l'invention, la quantité totale de métal (métaux) M déposée sur le matériau B, exprimée sous forme d'oxyde de métal, est d'au moins 1% en poids par rapport au poids total final du matériau B. De préférence, cette quantité est comprise entre 2 et 10% en poids.

### Les autres étapes additionnelles

La méthode selon l'invention peut, outre les étapes (1) à (4) décrites ci-avant, comprendre en option une ou plusieurs étapes additionnelles, effectuées avant et/ou après lesdites étapes, ou encore intercalées entre ces étapes.

La méthode selon l'invention peut ainsi comprendre, après l'étape (4), une étape de séchage du matériau B, qui peut être effectuée à une température allant de 80°C à 300°C, de préférence de 100°C à 150°C. Le séchage peut être effectué à l'air libre ou en présence d'un flux gazeux d'air, de gaz inerte tel que l'azote, ou de tout autre gaz approprié.

La méthode selon l'invention peut également comprendre en option, après l'étape (4), une étape de calcination du matériau B, qui peut être effectuée à une température allant de 300°C à 500°C. La calcination peut être effectuée à l'air libre ou en présence d'un flux gazeux d'air, de gaz inerte tel que l'azote, ou de tout autre gaz approprié.

Lorsque la méthode selon l'invention comprend déjà une étape de séchage, l'étape de calcination (s'il y en a une) est alors effectuée après celle-ci.

Enfin, la méthode selon l'invention peut inclure une ou plusieurs étape(s) finale(s) d'activation du matériau B final, dont le but est d'activer les sites métalliques.

Les exemples ci-après sont donnés à titre d'illustration de l'invention, et ne sauraient être interprétés de manière à en limiter la portée.

### EXEMPLES

### Matériaux utilisés

Les exemples ci-après ont été réalisés à partir d'un matériau donneur A1 qui est un piège à soufre usé suite à son utilisation dans une unité d'hydrotraitement d'hydrocarbures. La matériau A1 se présente sous forme de particules constituées d'alumine et de nickel (le nickel étant en partie sous forme de nickel réduit et partiellement réoxydé et en partie sous forme de sulfure de nickel). Ce matériau A1 présente une teneur totale en nickel, exprimée sur la base de la quantité équivalente d'oxyde de nickel NiO, telle que le ratio massique NiO : Al₂O₃ est de 3,2.

Ce piège A1 usé contient 1,7% en poids de carbone et 2,9% en poids de soufre. Ces mesures ont été effectuées au moyen d'un analyseur de la marque LECO modèle CS230, sur le produit A1 préalablement traité thermiquement dans un four vertical à une température de 250°C pendant 2 heures sous azote.

Comme matériau receveur B1, un catalyseur d'hydrogénation usé et régénéré, constitué de 41,8% d'oxyde de nickel NiO et d'alumine a été employé.

### Tests d'évaluation des performances de piégeage du soufre

Ces tests permettent d'évaluer la capacité d'un matériau poreux à piéger le soufre dans une charge d'hydrocarbures, et sont réalisés en utilisant deux composés organiques soufrés modèles qui sont le n-butyle mercaptan et le thiophène.

Le test consiste à mettre en contact une solution de l'un ou l'autre de ces deux composés avec le matériau dans un réacteur sous pression, dans des conditions données, et à déterminer la quantité de soufre piégée par le matériau testé.

Avant chaque test, le matériau est activé pendant 4 heures sous un flux d'hydrogène (H₂) à 450°C.

Pour le test de piégeage de mercaptan, une solution test contenant du n-butyle mercaptan dans un mélange de toluène/n-hexane (50/50 en volume) est utilisée. Cette solution a une teneur de soufre, exprimée sous forme de soufre élémentaire S, de 1000 ppm en poids par rapport au poids total de la solution test.

Pour le test de piégeage de thiophène, une solution test contenant du thiophène dans un mélange de toluène/n-hexane (50/50 en volume) est utilisée. Cette solution a une teneur de soufre, exprimée sous forme de soufre élémentaire S, de 1000 ppm en poids par rapport au poids total de la solution test.

Le réacteur utilisé est constitué de deux parties : un cylindre en téflon (PTFE) muni d'un capuchon et un corps de réacteur métallique (de type PARR 4749), permettant d'assurer l'étanchéité et le maintien de la pression au sein du réacteur.

Le réacteur est rempli de la façon suivante : le cylindre en PTFE, et son capuchon sont pesés, puis remplis avec 15 mL de solution test de l'un des deux composés organiques soufrés.

Dans le cas du test de piégeage de mercaptan, 0,05g de matériau poreux testé sont ajoutés, sous atmosphère inerte, dans le réacteur.

Dans le cas du test de piégeage de thiophène, 0,5g de matériau poreux testé sont ajoutés, sous atmosphère inerte, dans le réacteur.

Le cylindre en PTFE est alors fermé au moyen de son capuchon, et placé dans le réacteur métallique. Celui-ci est fermé hermétiquement et placé dans une enceinte thermostatée à 185°C pendant 17h.

Le réacteur est alors refroidi à température ambiante avant d'être ouvert sous atmosphère inerte. Le cylindre PTFE et son capuchon sont pesés, puis un échantillon de liquide est prélevé pour analyse, avec un analyseur de teneur en soufre de type Antek 9000.

La différence de teneur en soufre de la solution après test par rapport à celle de la teneur en soufre avant test permet de calculer la quantité de soufre piégé par le matériau poreux. Cette quantité est exprimée en % en poids de soufre piégé, par rapport au poids de matériau poreux.

### Exemple 1 comparatif

Un premier essai de recyclage du nickel depuis le matériau A1 vers le matériau B1 a été réalisé, en suivant un protocole comparatif constitué des étapes (1), (3) et (4) décrites ci-dessous.

### Etape (1)

Le matériau A1 a été soumis à une étape de traitement thermique, en le maintenant à une température de 550°C pendant 2h sous air dans un four à moufle. On obtient ainsi le matériau A1'. Ce matériau contient 0,1% en poids de carbone et 2,8% en poids de soufre. Ces teneurs ont été mesurées avec un analyseur de la marque LECO, modèle CS230.

### Etape (3)

50g du matériau A1' ont été placés dans une fiole rotative équipée d'un agitateur mécanique, et une solution S1 obtenue par mélange de 103 g d'eau et 146,6 g d'une solution à 50% en poids d'acide citrique dans l'eau a été ajoutée. Le contenu du flacon a été agité en le maintenant à reflux à une température de 100°C pendant une durée de 2 heures.

Après refroidissement, le mélange est filtré et une solution S1' (comprenant la solution S1 et des sels de nickel) est ainsi récupérée.

### Etape (4)

La solution S1' est alors mise en contact avec le matériau B1, en procédant par imprégnation à volume poreux en utilisant 43,4g de la solution S1' pour 100g de matériau B1.

Le mélange est laissé maturer à température ambiante pendant une durée de 16 heures.

Puis le matériau B1 est séché pendant 1,5 heures dans un four à 130°C, et l'imprégnation à volume poreux est réitéré à l'identique, avec la même quantité de solution S1' pendant une durée de 16 heures.

Le matériau est enfin soumis à un séchage final (1,5 heures dans un four à 130°C). On dénomme B1c le matériau modifié obtenu par la méthode comparative ci-avant.

### Détermination des propriétés du matériau B1_{C}

Analyse de la teneur en nickel (par fluorescence aux rayons X) : le matériau B1_{C} présente une teneur en oxyde de nickel de 46,8% en poids. Ainsi, la méthode incluant les étapes (1), (3) et (4) a permis d'augmenter la teneur en NiO du matériau receveur B1 de 41,8% à 46,8% en poids.

Performances en piégeage du soufre : les deux tests de piégeage du soufre ont été effectués, sur le matériau B1 d'origine, et sur le matériau B1_{C}. Les résultats sont détaillés dans le tableau 1 ci-dessous.

**[Table 1]**

| Matériau | Test de piégeage du n-butyle mercaptan (% en poids de S piégé) | Test de piégeage du thiophène (% en poids de S piégé) |
|---|---|---|
| B1 | 13,3 | 0,3 |
| B1_{C} | 13,1 | 0,2 |

Les résultats montrent que le matériau modifié selon la méthode comparative, bien qu'il présente une teneur en nickel plus élevée que le matériau B1 de départ, présente cependant une activité légèrement diminuée par rapport au matériau B1.

### Exemple 2 selon l'invention

Un deuxième essai de recyclage du nickel depuis le matériau A1 vers le matériau B1 a été réalisé, en suivant un protocole conforme à l'invention, constitué des étapes (1), (2), (3) et (4) suivantes :
- les étapes (1), (3) et (4) sont strictement identiques à celles de l'exemple 1 ci-avant ;
- entre les étapes (1) et (3), est insérée une étape (2) décrite ci-dessous.

### Etape (2)

50g du matériau A1' ont été placés dans une fiole rotative équipée d'un agitateur mécanique, puis 100 ml d'eau déminéralisée ont été ajoutés. Le contenu du flacon a été agité à une température de 50°C pendant une durée de 2 heures.

Après refroidissement à température ambiante, l'eau a été éliminée par filtration et le matériau A1" ainsi récupéré a été replacé dans la fiole pour la mise en oeuvre de l'étape (3).

Le matériau obtenu à l'issue de l'étape (4) après séchage final est dénommé B1_{I-1}.

### Détermination des propriétés du matériau B1_{I-1}

Analyse de la teneur en nickel (par fluorescence aux rayons X) : le matériau B1_{I-1} présente une teneur en oxyde de nickel de 46,5% en poids. Ainsi, la méthode selon l'invention incluant les étapes (1), (2), (3) et (4) a permis d'augmenter la teneur en NiO du matériau receveur B1 de 41,8% à 46,5% en poids.

Performances en piégeage du soufre : les deux tests de piégeage du soufre ont été effectués, sur le matériau B1 d'origine, et sur le matériau B1_{I-1}. Les résultats dont détaillés dans le tableau 2 ci-dessous.

**[Table 2]**

| Matériau | Test de piégeage d u n-butyle mercaptan (% en poids de S piégé) | Test de piégeage du thiophène (% en poids de S piégé) |
|---|---|---|
| B1 | 13,3 | 0,3 |
| B1_{I-1} | 15,5 | 0,5 |

Les résultats montrent que le matériau modifié conformément à la méthode selon la présente invention présente une activité significativement supérieure à celle du matériau d'origine B1.

### Exemple 3 selon l'invention

Un troisième essai de recyclage du nickel depuis le matériau A1 vers le matériau B1 a été réalisé, en suivant un protocole conforme à l'invention, constitué des étapes (1), (2), (3) et (4) décrites ci-dessous.

### Etape (1)

Le matériau A1 a été soumis à une étape de traitement thermique, en le maintenant à une température de 550°C pendant 2h sous air dans un four à moufle. On obtient ainsi le matériau A1'. Ce matériau contient 0,1% en poids de carbone et 2,8% en poids de soufre. Ces teneurs ont été mesurées avec un analyseur LECO CS230.

### Etape (2)

50g du matériau A1' ont été placés dans une fiole rotative équipée d'un agitateur mécanique, puis 100 ml d'eau déminéralisée ont été ajoutés. Le contenu du flacon a été agité à une température de 50°C pendant une durée de 2 heures.

Après refroidissement à température ambiante, l'eau a été éliminée par filtration et le matériau A1" ainsi récupéré a été replacé dans la fiole.

### Etape (3)

Une solution S2 obtenue par mélange de 176 g d'eau et 22,8 g d'acide acétique de pureté 99% en poids dans l'eau a été ajoutée au matériau A1" dans la fiole. Le contenu du flacon a été agité en le maintenant à reflux à une température de 100°C pendant une durée de 2 heures.

Après refroidissement, le mélange est filtré et une solution S2' (comprenant la solution S2 et des sels de nickel) est ainsi récupérée.

### Etape (4)

La solution S2' est alors mise en contact avec le matériau B1, en procédant par imprégnation à volume poreux en utilisant 35,5g de solution S2' pour imprégner 100g de matériau B1.

Le mélange est laissé maturer à température ambiante pendant une durée de 16 heures.

Puis le matériau B1 est séché pendant 1,5 heures dans un four à 130°C, et l'imprégnation à volume poreux est réitéré à l'identique, avec la même quantité de solution S2' pendant une durée de 16 heures.

Le matériau est enfin soumis à un séchage final (1,5 heures dans un four à 130°C). On dénomme B1_{I-2} le matériau modifié obtenu par la méthode comparative ci-avant.

### Détermination des propriétés du matériau B1_{I-2}

Analyse de la teneur en nickel (par fluorescence aux rayons X) : le matériau B1_{I-2} présente une teneur en oxyde de nickel de 45,4% en poids. Ainsi, la méthode selon l'invention incluant les étapes (1), (2), (3) et (4) a permis d'augmenter la teneur en NiO du matériau receveur B1 de 41,8% à 45,4% en poids.

Performances en piégeage du soufre : les deux tests de piégeage du soufre ont été effectués, sur le matériau B1 d'origine, et sur le matériau B1_{I-2}. Les résultats dont détaillés dans le tableau 3 ci-dessous.

**[Table 3]**

| Matériau | Test de piégeage du n-butyle mercaptan (% en poids de S piégé) | Test de piégeage du thiophène (% en poids de S piégé) |
|---|---|---|
| B1 | 13,3 | 0,3 |
| B1_{I-2} | 15,1 | 0,5 |

Les résultats montrent que le matériau modifié conformément à la méthode selon la présente invention présente une activité significativement supérieure à celle du matériau d'origine B1.

## Revendications

1. Méthode de recyclage d'un métal ou de plusieurs métaux M choisis parmi ceux appartenant aux colonnes 8 à 12 du tableau périodique des éléments, présents au moins en partie sous forme de sulfures métalliques dans un matériau poreux A qui comprend au moins un oxyde minéral et présente une teneur en soufre supérieure ou égale à 2% en poids, **caractérisée en ce qu'**elle comprend les étapes successives suivantes:
(1) au moins une étape de traitement thermique du matériau A en présence d'oxygène, à une température comprise dans la gamme allant de 350°C à 900°C,
(2) au moins une étape de lavage du matériau A' issu de l'étape (1) au moyen d'un solvant aqueux ;
(3) au moins une étape d'extraction du ou des métaux M par mise en contact du matériau A" issu de l'étape (2) avec une solution S contenant au moins un acide carboxylique ; et
(4) au moins une étape de dépôt d'au moins une partie du ou des métaux M sur un matériau poreux B différent dudit matériau A, par mise en contact de la solution S' issue de l'étape (3) avec ledit matériau B.

2. Méthode selon la revendication précédente, **caractérisée en ce que** le métal ou les métaux M sont choisis parmi le fer, le cobalt, le nickel, le cuivre, et le zinc et de préférence parmi le nickel, le cuivre, et le zinc.

3. Méthode selon l'une quelconque des revendications précédentes, **caractérisée en ce que** le matériau A contient un seul métal M appartenant aux colonnes 8 à 12 du tableau périodique des éléments, ledit métal M étant de préférence le nickel, le cuivre, ou le zinc.

4. Méthode selon l'une quelconque des revendications précédentes, **caractérisée en ce que** le matériau B contient un ou plusieurs oxydes minéraux réfractaires, choisis parmi les alumines, les silices, les silice-alumines, les zéolithes, les zircones, les oxydes de titane et de bore, et les mélanges de tels oxydes, et de préférence parmi les alumines, les silices, les silice-alumines, et plus préférentiellement les alumines.

5. Méthode selon l'une quelconque des revendications précédentes, **caractérisée en ce que** l'étape de traitement thermique (1) est effectuée à une température comprise dans la gamme de 400 à 600°C, de préférence de 450 à 580°C et plus préférentiellement de 480 à 570°C.

6. Méthode selon l'une quelconque des revendications précédentes, **caractérisée en ce que** le solvant aqueux employé à l'étape de lavage (2) contient au moins 50% en poids d'eau, de préférence au moins 75% en poids, et mieux encore au moins 90% en poids d'eau, et mieux encore le solvant est constitué d'eau.

7. Méthode selon l'une quelconque des revendications précédentes, **caractérisée en ce que** l'étape (2) de lavage est effectuée à une température allant de 20°C à 150°C, de préférence de 25 à 100°C, et plus préférentiellement de 30 à 70°C.

8. Méthode selon l'une quelconque des revendications précédentes, **caractérisée en ce que** les ou les acides carboxyliques présents dans la solution S employée à l'étape (3) sont choisis parmi les mono-acides, les di-acides et les tri-acides carboxyliques, comprenant de préférence de 1 à 8 atomes de carbone.

9. Méthode selon la revendication précédente, **caractérisée en ce que** le ou les acides carboxyliques sont choisis parmi l'acide acétique, l'acide citrique, l'acide maléique, l'acide glycolique, et les mélanges de ces acides, et de préférence parmi l'acide acétique, l'acide citrique, et leurs mélanges

10. Méthode selon l'une quelconque des revendications précédentes, **caractérisée en ce que** la solution S contient une teneur totale d'acides carboxyliques comprise dans la gamme allant de 5 à 50% en poids, de préférence de 10 à 30% en poids, par rapport au poids total de la solution S.

11. Méthode selon l'une quelconque des revendications précédentes, **caractérisée en ce que** l'étape (3) est effectuée à une température allant de 20°C à 150°C, de préférence de 50 à 130°C, et plus préférentiellement de 80 à 120°C.

12. Méthode selon l'une quelconque des revendications précédentes, **caractérisée en ce que** l'étape (4) est réalisée par imprégnation du matériau B au moyen de la solution S' en procédant par imprégnation à sec, par imprégnation à saturation du volume poreux, ou par trempage du matériau B dans un large excès de solution S'.

13. Méthode selon l'une quelconque des revendications précédentes, **caractérisée en ce qu'**au cours de l'étape (4) la solution S' est maintenue en contact avec ledit matériau B pendant une durée allant de 1 à 30 heures, de préférence de 5 à 25 heures, et mieux encore de 10 à 20 heures.

14. Méthode selon l'une quelconque des revendications précédentes, **caractérisée en ce que** l'étape (4) est répétée en mettant en contact le matériau B soit avec la même solution S', soit avec une solution S₀' différente, issue du traitement au moyen des étapes (1) à (3) d'un matériau de départ A₀ différent de A, et qui contient un métal ou plusieurs métaux M₀' qui peuvent être identiques ou différents du métal ou des métaux M.

15. Méthode selon l'une quelconque des revendications précédentes, **caractérisée en ce qu'**elle comprend, après l'étape (4), une étape de séchage du matériau B, effectuée à une température allant de 80°C à 300°C, de préférence de 100°C à 150°C.
